# EUROPEAN PATENT SPECIFICATION

(11) **EP 1 940 092 B1**
(45) Date of publication and mention of the grant of the patent: **22.05.2013**
(21) Application number: 07123973.5
(22) Date of filing: 21.12.2007
(51) Int. Cl.: H04L 12/24

(54) **Method and device for selecting a sub-route**
Verfahren und Vorrichtung zur Auswahl einer Nebenroute
Procédé et dispositif pour sélectionner une sous-route

(30) Priority: 28.12.2006 CN 200610156607
(43) Date of publication of application: 02.07.2008
(73) Proprietor: Huawei Technologies Co., Ltd., Longgang District, Shenzhen Guangdong 518129 (CN)
(72) Inventor: Chen, Liang, c/o Huawei Techn.Co.Ltd., Huawei Adm.Bldg., Guangdong 518129 (CN); Luo, Hualin , c/o Huawei Techn.Co.Ltd., Huawei Adm.Bldg., Guangdong 518129 (CN)
(74) Representative: Körber, Martin Hans

(56) References cited:
- EP-A- 0 696 147
- WO-A-97/16005
- US-A- 6 141 319
- US-A1- 2004 042 402
- US-A1- 2005 123 121
- US-A1- 2006 002 327

## Description

### Field of the Invention

The present invention relates to communication technologies, and particularly, to a method and a device for selecting a sub-route.

### Background of the Invention

A route for transferring voice data between a calling user and a called user is to be selected in a call establishing process. When the route selection fails, existing solutions include: disconnecting the call directly; or changing the called party number and reselecting a route.

If the route selection in the call establishing process fails, failure processing needs to be performed according to a returned failure reason value in the latter solution. Specifically, the failure processing includes changing the called party number, analyzing the called party number again, and reselecting a new route according to configured route selection information.

The inventor found the following issues by studying the above-mentioned solutions.

The call completion rate of the former solution is low, it is mainly because corresponding failure processing for reselecting a route is not configured for a call, and thus disconnecting processing is performed when the route selection for the call fails.

The data configuration in the latter solution is complex, it is mainly because when the route selection fails and a route is to be reselected in a call establishing process, the called party number needs to be changed and then analyzed again and the changed called party number needs to be restored to the original called party number after a route is reselected, and thus multiple related records are necessary to be configured.

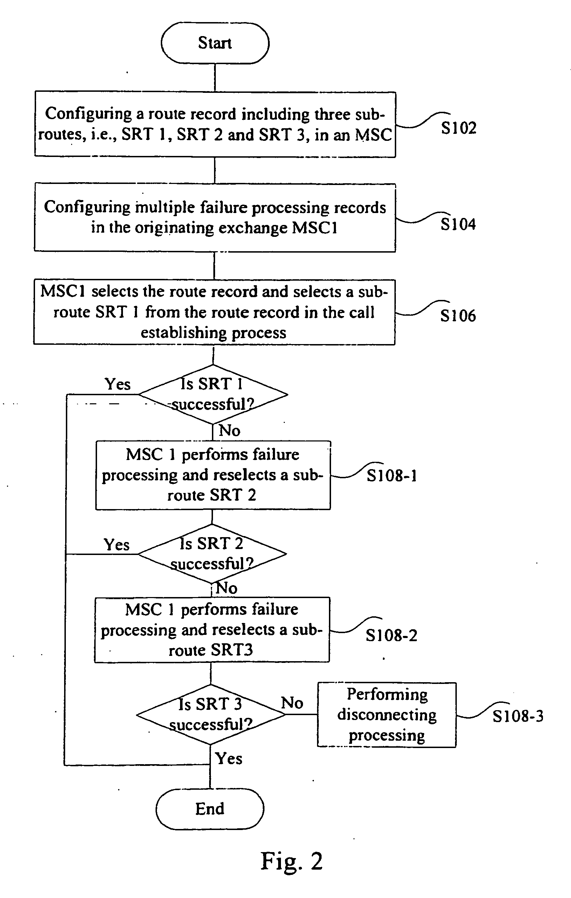

In US 2005/123121 A1, a call failure information propagation is provided when the service provider network attempts to avoid the failure using an alternative route. And the Fig.2 shows a block diagram of the call failure recording system, in which a real time processor (20) processes the failure logs queue, provides a unique failure log ID based on the type of failure log, and updates/creates the log recorder; a log record storage (30) is configured to store the log recorder.

WO 97/16005 A discloses a method for establishing a switched virtual circuit in a digital network having network nodes with static routing table. When a node is unable to forward a call over its outgoing primary route due to a physical failure, the call is dynamically rerouted over the alternate route stored in the routing table.

US 6,141,319 A discloses an alternative routing scheme in high-speed networks ensure fault tolerance in the event of a link failure. A heuristic algorithm, based on maximal-flow algorithm, is first used to partition the network into parts: one part carries regular or primary traffic and other part is reserved to carry re-routed traffic in the event of a link failure.

US 2006/002327 A1 discloses a communication system, in which at least one the network element includes at least one storage which stores information on the traffic-information-receiving availability of at least one point of at least one other network element. The at least one storage stores IP addresses of the endpoint of the other network element, and associated with each IP address, the information on the traffic-information-receiving availability thereof.

US 2004/042402 A1 relates to a method for operating a node in a computer network. The method includes the process of determining an alternate path for one or more links, and the process of rerouting traffic on the alternate path.

EP 0 696 147 A relates to a traffic routing system, which has the calls placed between a source exchange (I) and a target exchange (2) placed via one or more defined paths, with an alternative path selected via a defined selection plan when no defined path is available, for handling the traffic overload.

### Summary of the Invention

Embodiments of the present invention provide a method and a device for selecting a sub-route, which may improve the call completion rate, simplify data configuration and reselect a sub-route for multiple times.

A method for selecting a sub-route includes:
configuring a route record which contains at least two sub-route groups wherein a second sub-route group includes at least one backup sub-route for TDM bearer;
selecting a first sub-route from a first sub-route group in a call establishing process;
reselecting the backup sub-route different from the first sub-route from the second sub-route group according to a failure processing record when the first sub-route fails.

A device for selecting a sub-route includes:
a route record configuring module, operable for configuring and storing a route record containing at least two sub-route groups wherein a second sub-route group includes at least one backup sub-route for TDM bearer;
a sub-route selecting module, operable for selecting a first sub-route from a first sub-route group in a call establishing process;
a failure processing module, operable for reselecting the backup sub-route different from the first sub-route from the second sub-route group according to a failure processing record when the first sub-route fails.

As can be seen from the above technical solutions, in the embodiments of the present invention, another sub-route in the route record may be directly selected to continue the call when the route selection fails, and thus the call completion rate is improved. In the embodiments of the present invention, multiple sub-routes are configured in the same route record and a route is reselected according to a configured failure processing record when the route selection fails, and thus the data configuration may be simplified and the route may be reselected for multiple times when the route selection fails.

### Brief Description of the Drawings

Figure 1 is a schematic diagram illustrating the networking structure of a tandem exchange in accordance with an embodiment of the present invention.
Figure 2 is a schematic flow chart illustrating a method for selecting a sub-route in accordance with an embodiment of the present invention.
Figure 3 is a schematic flow chart for reselecting a route in accordance with an embodiment of the present invention.
Figure 4 is a block diagram illustrating a device for selecting a sub-route in accordance with an embodiment of the present invention.
Figure 5 is a schematic diagram illustrating a device for selecting a sub-route in accordance with another embodiment of the present invention.
Figure 6 is a schematic diagram illustrating the structure of a failure processing module shown in Figure 5 in accordance with an embodiment of the present invention.

### Detailed Description of the Invention

Embodiments of the present invention are hereinafter described specifically with reference to the accompanying drawings. The accompanying drawings are a portion of the present application and are used to interpret the principle of the present invention in conjunction with the embodiments of the present invention. It is obvious that the embodiments to be described are only a part rather than all of the embodiments of the present invention. All other embodiments derived by the skilled in the art from the embodiments of the present invention without inventive steps should fall in the protection scope of the present invention.

An embodiment of the present invention proposes a method for selecting a sub-route including the following steps:
in the first step, configure a route record including multiple sub-routes in a Mobile Switching Center (MSC);
in the second step, select one sub-route in the route record according to the route record in a calling establishing process;
in the third step, perform failure processing when the selecting of the sub-route in the second step fails, and reselect a sub-route different from the one selected in the second step.

Further, divide the multiple sub-routes into two groups: a first sub-route group including a sub-route with a Time Division Multiplex (TDM) bearer to a called user; a second sub-route group including multiple sub-routes from an MSC to another MSC.

Further, configure multiple failure processing records in the MSC to perform failure processing when the route selection fails.

Further, perform route reselection processing according to a failure reason value and the failure processing record corresponding to the failure reason value when the route selection fails.

Further, preferentially select a sub-route in the second sub-route group; select a sub-route in the first sub-route group when the selecting of all sub-routes in the second sub-route group fails.

Further, perform disconnecting processing when the selecting of all sub-routes fails.

An embodiment of the present invention also provides a device for selecting a sub-route, which includes:
a route record configuring module, capable of configuring and storing a route record including multiple sub-routes;
a sub-route selecting module, capable of selecting a sub-route from the route record stored by the route record configuring module in a calling establishing process;
a failure processing module, capable of performing failure processing to reselect a sub-route from the route record configured and stored by the route record configuring module when the selecting of the sub-route fails.

Further, the device also includes:
a failure processing record configuring module, capable of configuring a failure processing record for route reselection; and/or
a failure reason returning module, capable of returning a failure reason value when the selecting of the sub-route fails.

Further, the failure processing module performs failure processing of reselecting a sub-route according to the failure processing record corresponding to the failure reason value when receiving the failure reason value.

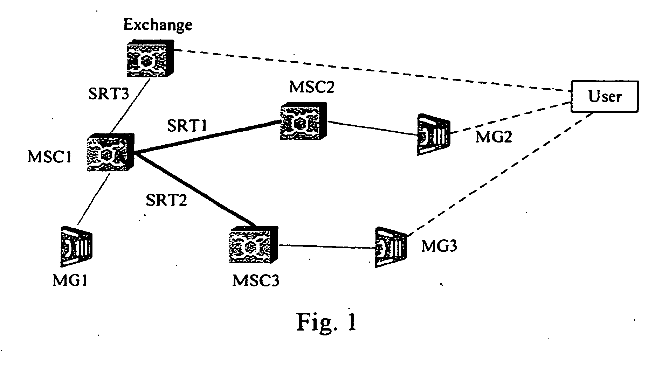

A method for selecting a sub-route is provided in an embodiment of the present invention. Figure 1 is a schematic diagram illustrating the networking structure of a tandem exchange according to the method. A switching device is first configured in the networking structure. As shown in Figure 1, the switching device includes three MSCs, i.e., MSC 1, MSC 2 and MSC 3. MSC 1 is an originating exchange which may call a called user through different sub-routes. In this embodiment, the called user may be connected to MSC 2 through Media Gateway 2 (MG 2), connected to MSC 3 through MG 3, or connected to the exchange with a TDM bearer. MSC 1 may call the called user respectively through MSC 2, MSC 3 and the exchange with the TDM bearer.

As shown in Figure 1, sub-route SRT 1 is from MSC 1 to MSC 2, and sub-route SRT 2 from MSC 1 to MSC 3 is another sub-route. In addition, although TDM transmission usually serves as a backup for Internet Protocol (IP) transmission after a switching network evolves from a TDM network to an IP network, the route from MSC 1 to the called user and via the exchange with the TDM bearer may also serve as a new sub-route SRT 3. In general, SRT 1 and SRT 2 are in a same sub-route group, and the sub-routes in the sub-route group share the load averagely, in other words, the load sharing percentages of SRT 1 and SRT 2 both are 50%. SRT 3 is in another sub-route group and is selected if both SRT 1 and SRT 2 fail, and in this case, the load sharing percentage of SRT 3 in the sub-route group is 100%.

Generally, the sub-route group including SRT 1 and SRT 2 has a higher priority while the sub-route group including SRT 3 has a lower priority. And, a sub-route in the sub-route group having a higher priority is selected firstly when a sub-route needs to be selected. In other words, SRT 3 in the sub-route group having a lower priority is not selected unless both SRT 1 and SRT 2 fail.

It is to be noted that in the case that the load sharing percentages of SRT 1 and SRT 2 both are 50% as described above, any of SRT 1 and SRT 2 may be first selected in a call establishing process, and the other sub-route is selected if the selecting of the sub-route fails. However, this case is only exemplary, and the load sharing percentages of the sub-routes may be set as demanded in applications. For example, SRT 1 in the sub-route group including SRT 1 and SRT 2 may be configured as a primary sub-route while SRT 2 is configured as a backup sub-route. The load sharing percentage of SRT 1 is 100% when SRT 1 is available. SRT 2 is selected only if the selecting of SRT 1 fails, and in this case, the load sharing percentage of SRT 2 is 100%, too. As another example, the load sharing percentages of SRT 1 and SRT 2 may also be set as 80% and 20%, respectively. To sum up, the load sharing percentages of the sub-routes may be set as demanded in networking.

In addition, it is to be noted that three MSCs are set in this embodiment for the sake of convenience. However, the present invention is not limited to this. An appropriate number of MSCs may be set as demanded in practice.

As shown in Figure 2, the method for selecting a sub-route includes the following processes according to the networking structure shown in Figure 1.

Block S102: A route record including three sub-routes, i.e., SRT 1, SRT 2 and SRT 3, is configured in the originating exchange MSC 1.

SRT 3 is also configured in the route record as a sub-route in this embodiment. However, those skilled in the art may appreciate that SRT 3 may not be included in the route record as demanded in practical networking. If SRT 3 is included in a route record, SRT 1 and SRT 2 may be included in a sub-route group having a higher priority while SRT 3 may be included in another sub-route group having a lower priority. Thus, SRT 1 and SRT 2 in the sub-route group having a higher priority may be selected firstly in a call establishing process, and in this case, the load sharing percentages of SRT 1 and SRT 2 both are 50%.

Block S104: A failure processing record for performing route reselection according to a special failure reason value is configured in the MSC 1.

A failure processing record configured in this process includes a "failure reason code" field and a "processing mode" field. The "failure reason code" field is used for recording a special failure reason value for route selection. For example, the "failure reason code" field may include the special failure reason value of the originating exchange and the special failure reason value of disconnecting for the destination exchange. The "processing mode" field is used for recording the mode of performing failure processing for a special failure reason value, e.g., reselecting a route or disconnecting the call. In this embodiment, the destination exchange returns a special failure reason value when the route selection of MSC 1 fails, and MSC 1 reselects a new route if the processing mode of reselecting a route corresponds to the special failure reason value. In addition, those skilled in the art may appreciate that the failure processing record may record only special failure reason values in an embodiment of the present invention, and when the route selection fails, such failure processing as reselecting a route is performed only if the special failure reason value is included in the failure processing record. The failure processing record may be configured in different manners according to the difference of network systems. In addition, one or more failure processing records may be configured as demanded in network planning.

Block S106: MSC 1 selects the route record and selects a sub-route SRT 1 in the route record in the call establishing process. In this process, a connection is established for the call and this procedure terminates if the selected SRT 1 succeeds. Otherwise, Block S108-1 is performed.

In this embodiment, because the route record includes a sub-route group having a higher priority and a sub-route group having a lower priority, the sub-route selected in this process is SRT 1 in the sub-route group having a higher priority in the route record.

Block S108-1: MSC 1 performs failure processing using the failure processing record and reselects a sub-route SRT 2 when the destination exchange of SRT 1, i.e., MSC 2, returns a special failure reason value or the originating exchange generates a failure reason value. Specifically, the failure processing record includes two fields, a "failure reason code" field and a "processing mode" field, and MSC 1 performs the failure processing according to the processing mode corresponding to the special failure reason value acquired from the failure processing record. In this embodiment, the processing mode is to reselect a sub-route, and accordingly, MSC 1 reselects another sub-route SRT 2 in the sub-route group having a higher priority. In an embodiment of the present invention, the failure processing record may include only special failure reason values. In this case, MSC 1 reselects another sub-route SRT 2 in the sub-route group having a higher priority only if the special failure reason value returned by MSC 2 or the failure reason value generated by the originating exchange is included in the failure processing record. In this process, a connection is established for the call and this procedure terminates if the selected SRT 2 succeeds. Otherwise, Block S 108-2 is performed.

The order for MSC 1 selecting a sub-route described in this embodiment is based on the load sharing percentages in a call set in advance. Either SRT 1 or SRT 2 may be first selected if the two sub-routes share the load averagely. It is taken as the example that SRT 1 is first selected and SRT 2 is reselected in the case that the selecting of SRT 1 fails, for the sake of convenience.

Block S108-2: In the case that the destination exchange MSC 3 of SRT 2 returns a special failure reason value and the processing mode corresponding to the special failure reason value acquired from the failure processing record is to reselect a sub-route, MSC 1 reselects a sub-route SRT 3. In this process, a connection is established for the call and this procedure terminates if the selected SRT 3 succeeds. Otherwise, Block S 108-3 is performed.

Block S 108-3: Disconnecting processing is performed for the call when the selecting of SRT 3 fails.

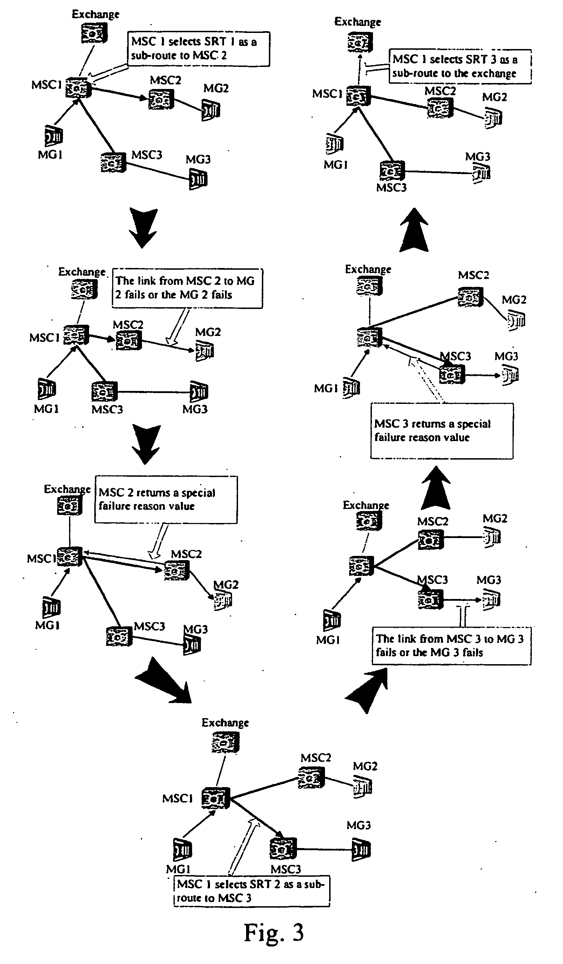

According to the above embodiment, Figure 3 shows a processing procedure where SRT 1 is first selected, and SRT 2 is selected if the selecting of SRT 1 fails, and then SRT 3 is selected if the selecting of SRT 2 also fails. A connection is established for the call and this procedure terminates if a selected certain sub-route succeeds in this processing procedure.

It is to be noted, in the case that there are N sub-routes including SRT 1, SRT 2, ..., SRT n-1 and SRT n, and SRT n which is a route with a TDM bearer from MSC 1 to the called user also serves as a new sub-route, SRT n is selected only if SRT 1, SRT 2, ..., SRT n-1 all are selected and fail.

It is also to be noted that in the embodiments of the present invention, the sub-route with the TDM bearer is added into the route record and may be selected when other sub-routes are selected and fail, and thus the reliability of the convergence network may be further improved.

A device for selecting a sub-route is provided in another embodiment of the present invention.

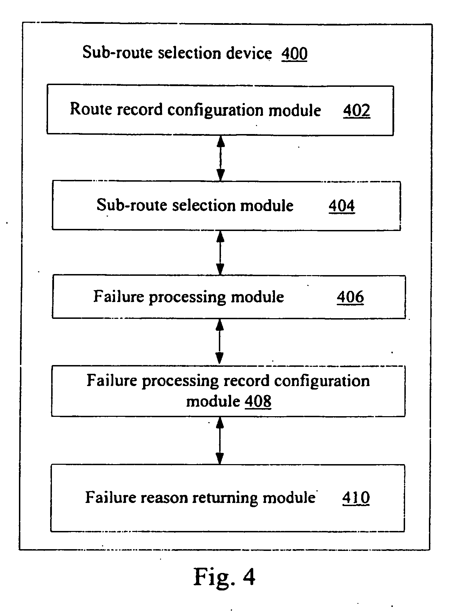

As shown in Figure 4, sub-route selection device 400 includes:
route record configuring module 402 for configuring and storing a route record including multiple sub-routes; sub-route selecting module 404 for selecting a sub-route from the route record configured and stored by the route record configuring module 402 in a call establishing process; failure processing module 406 for performing failure processing to reselect a sub-route from the route record stored by the route record configuring module 402 when the sub-route selection of the sub-route selecting module 404 fails; failure processing record configuring module 408 for configuring a failure processing record for route reselection processing. The sub-route selecting module 400 may further include failure reason returning module 410 for returning a special failure reason value to the failure processing record configuring module 408 when the route selection fails.

The failure processing module 406 performs failure processing of reselecting a sub-route according to the failure processing mode corresponding to the special failure reason value recorded in the failure processing record when receiving a special failure reason value returned by the failure reason returning module 410.

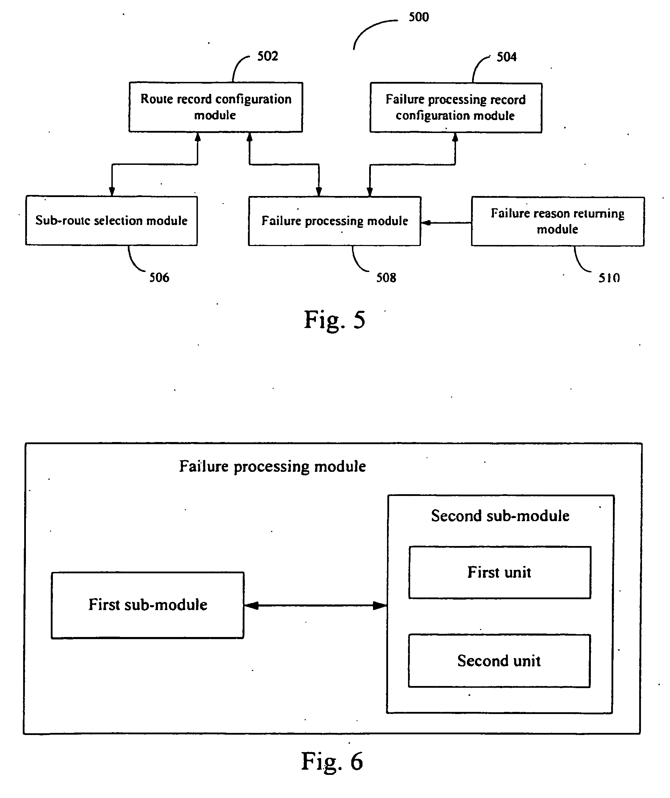

A device for selecting a sub-route shown in Figure 5 is also provided in another embodiment of the present invention. The device may be deployed in an exchange in a communication network.

Sub-route selection device 500 in this embodiment includes the following modules.

Route record configuring module 502 is used for configuring and storing a route record. The route record includes multiple sub-routes. For example, the route record may include three sub-routes shown in Figure 1, i.e., SRT 1, SRT 2, and SRT 3. Moreover, SRT 1 and SRT 2 may be configured in a sub-route group having a higher priority while SRT 3 is configured in another sub-route group having a lower priority, and meanwhile, the load sharing percentages of SRT 1 and SRT 2 both are configured as 50%. Thus, a sub-route in the sub-route group having a higher priority may be selected firstly and any of the sub-routes in the sub-route group having a higher priority may be selected firstly in a call establishing process. Practically, the route record may also include only SRT 1 and SRT 2, and the load sharing percentages of SRT 1 and SRT 2 are 50%.

Failure processing record configuring 504 is used for configuring a failure processing record. The failure processing record includes a "failure reason code" field and a "processing mode" field. The "failure reason code" field is used for recording a special failure reason value for route selection while the "processing mode" field is used for recording failure processing mode corresponding to a special failure reason value. In this embodiment, the destination exchange returns a special failure reason value when the selecting of the route by the originating exchange fails, and the originating exchange reselects a new route if the processing mode corresponding to the special failure reason value is "reselecting a route". Practically, a failure processing record may also record only special failure reason values, and when the route selection fails, failure processing of reselecting a route is performed only if the special failure reason value is contained in the failure processing record. One or more failure processing records may be configured.

Sub-route selecting module 506 is used for selecting a sub-route from the route record configured and stored by the route record configuring module 502 in a call establishing process.

Failure processing module 508 is used for performing failure processing, e.g., "reselecting a route", according to the received special failure reason value to reselect a sub-route from the route record configured and stored by the route record configuring module 502 when the selecting of the sub-route by the sub-route selecting module 506 fails. As shown in Figure 6, if a failure processing record includes a "failure reason code" field and a "processing mode" field, the failure processing module 508 in the embodiment of the present invention may further include two sub-modules: a first sub-module for querying the failure processing record configured by the failure processing record configuring module 504 to acquire the processing mode corresponding to the special failure reason value when receiving the special failure reason value; a second sub-module for reselecting a sub-route in the route record according to the processing mode corresponding to the special failure reason value acquired by the first sub-module. If the failure processing record includes only special failure reason values, the first sub-module queries the failure processing record configured by failure processing record configuring module 504 when receiving the special failure reason value, and the second sub-module reselects a sub-route different from the first sub-route in the route record according to the special failure reason value. In the case that the route record includes two sub-route groups, the second sub-module may further include: a first unit for reselecting a sub-route different from the failed sub-route in the sub-route group having a higher priority when there is a sub-route different from the sub-route having failed previously in the sub-route group having a higher priority, and a second unit for reselecting a sub-route in the sub-route group having a lower priority when there is no sub-route different from the sub-route having failed previously in the sub-route group having a higher priority.

In this embodiment, the sub-route selection device may further include failure reason returning module 510 for returning a special failure reason value to the failure processing module 508 when the route selection fails.

The devices for selecting a sub-route described above are only embodiments of the present invention and there may be various equivalent substitutions, modifications and variations in practice. For example, some modules may be expanded and/or combined, and other modules may be inserted into the above devices. Therefore, the devices described above cannot be used for limiting the present invention.

The foregoing is only preferred embodiments of the present invention and is not for use in limiting the protection scope thereof, and for those skilled in the art, there may be various modifications and changes to the present invention.

## Claims

1. A method for selecting a sub-route, **characterized by** comprising:
configuring (S102) a route record which contains at least two sub-route groups, wherein a second sub-route group includes at least one backup sub-route for Time Division Multiplex (TDM) bearer;
selecting (S106) a first sub-route from a first sub-route group in a call establishing process;
reselecting (S108-1) the backup sub-route different from the first sub-route from the second sub-route group according to a failure processing record when the first sub-route fails.

2. The method of Claim 1, wherein reselecting the backup sub-route different from the first sub-route from the second sub-route group according to the failure processing record comprises:
configuring the failure processing record for recording a corresponding relation between a special failure reason value for failure of route selection and a processing mode;
acquiring a processing mode corresponding to a special failure reason value for failure of the first sub-route from the failure processing record by querying the failure processing record, and reselecting the backup sub-route different from the first sub-route from the second sub-route group if the processing mode is reselecting a sub-route.

3. The method of Claim 1, wherein reselecting the backup sub-route different from the first sub-route from the second sub-route group according to the failure processing record comprises:
configuring the failure processing record for recording a special failure reason value for failure of route selection;
querying the failure processing record, and reselecting the backup sub-route different from the first sub-route from the second sub-route group if a special failure reason value for failure of the first sub-route is contained in the failure processing record.

4. The method of Claim 2 or 3, wherein the first sub-route group contains at least one sub-route from a Mobile Switching Center (MSC) to another MSC.

5. The method of Claim 4, further comprising:
selecting a second sub-route different from the first sub-route from the first sub-route group if there is at least one sub-route different from the first sub-route in the first sub-route group;
selecting the backup sub-route from the second sub-route group if there is no sub-route different from the first sub-route in the first sub-route group.

6. The method of any of Claims 1, 2, 3 and 5, further comprising:
performing (S108-3) disconnecting processing for the call after all sub-routes selected from the route record fail.

7. The method of any of Claims 1, 2, 3 and 5, wherein the route record is configured in an MSC.

8. A device for selecting a sub-route, **characterized by** comprising:
a route record configuring module (402, 502), operable for configuring and storing a route record containing at least two sub-route groups, wherein a second sub-route group includes at least one backup sub-route for Time Division Multiplex (TDM) bearer;
a sub-route selecting module (404, 506), operable for selecting a first sub-route from a first sub-route group in a call establishing process;
a failure processing module (406, 508), operable for reselecting the backup sub-route different from the first sub-route from the second sub-route group according to a failure processing record when the first sub-route fails.

9. The device of Claim 8, further comprising:
a failure processing record configuring module (504), operable for configuring the failure processing record for recording a corresponding relation between a special failure reason value for failure of route selection and a processing mode; wherein
the failure processing module comprises:
a first sub-module, operable for acquiring a processing mode corresponding to a special failure reason value for failure of the first sub-route from the failure processing record by querying the failure processing record configured by the failure processing record configuring module when receiving the special failure reason value;
a second sub-module, operable for reselecting the backup sub-route different from the first sub-route from the second sub-route group when the processing mode corresponding to the special failure reason value acquired by the first sub-module is reselecting a sub-route.

10. The device of Claim 8, further comprising:
a failure processing record configuring module (408), operable for configuring the failure processing record for recording a special failure reason value for failure of route selection; wherein
the failure processing module comprises:
a first sub-module, operable for querying the failure processing record configured by the failure processing record configuring module when receiving a special failure reason value;
a second sub-module, operable for reselecting the backup sub-route different from the first sub-route from the second sub-route group if a special failure reason value for failure of the first sub-route is contained in the failure processing record.

11. The device of Claim 9 or 10, wherein the second sub-module comprises:
a first unit, operable for selecting a second sub-route different from the first sub-route from the first sub-route group if there is at least one sub-route different from the first sub-route in the first sub-route group;
a second-unit, operable for selecting the backup sub-route different from the first sub-route from the second sub-route group if there is no sub-route different from the first sub-route in the first sub-route group.

12. The device of Claim 9, further comprising:
a failure reason returning module (410, 510), operable for returning the special failure reason value to the failure processing module when sub-route selected fails.

## Patentansprüche

1. Verfahren zum Auswählen einer Unterroute, **dadurch gekennzeichnet, dass** es Folgendes umfasst:
Konfigurieren (S 102) einer Routenaufzeichnung, die wenigstens zwei Unterrouten-Gruppen enthält, wobei eine zweite Unterrouten-Gruppe wenigstens eine Sicherungs-Unterroute für einen Zeitmultiplex-Träger (TDM-Träger) enthält;
Auswählen (S106) einer ersten Unterroute aus einer ersten Unterrouten-Gruppe in einem Anrufaufbauprozess;
erneutes Wählen (S108-1) der von der ersten Unterroute verschiedenen Sicherungs-Unterroute aus der zweiten Unterrouten-Gruppe in Übereinstimmung mit einer Fehlerverarbeitungsaufzeichnung, wenn die erste Unterroute fehlerhaft ist.

2. Verfahren nach Anspruch 1, wobei das erneute Auswählen der von der ersten Unterroute verschiedenen Sicherungs-Unterroute aus der zweiten Unterrouten-Gruppe gemäß der Fehlerverarbeitungsaufzeichnung Folgendes umfasst:
Konfigurieren der Fehlerverarbeitungsaufzeichnung zum Aufzeichnen einer entsprechenden Beziehung zwischen einem speziellen Fehlergrund-Wert für einen Fehler der Routenauswahl und einem Verarbeitungsmodus;
Erfassen eines Verarbeitungsmodus, der einem speziellen Fehlergrund-Wert für einen Fehler der ersten Unterroute entspricht, aus der Fehlerverarbeitungsaufzeichnung durch Abfragen der Fehlerverarbeitungsaufzeichnung und erneutes Auswählen der von der ersten Unterroute verschiedenen Sicherungs-Unterroute aus der zweiten Unterrouten-Gruppe, falls der Verarbeitungsmodus eine Unterroute erneut auswählt.

3. Verfahren nach Anspruch 1, wobei das erneute Auswählen der von der ersten Unterroute verschiedenen Sicherungs-Unterroute aus der zweiten Unterrouten-Gruppe gemäß der Fehlerverarbeitungsaufzeichnung Folgendes umfasst:
Konfigurieren der Fehlerverarbeitungsaufzeichnung zum Aufzeichnen eines speziellen Fehlergrund-Werts für einen Fehler der Routenauswahl;
Abfragen der Fehlerverarbeitungsaufzeichnung und erneutes Auswählen der von der ersten Unterroute verschiedenen Sicherungs-Unterroute aus der zweiten Unterrouten-Gruppe, falls ein spezieller Fehlergrund-Wert für einen Fehler der ersten Untergruppe in der Fehlerverarbeitungsaufzeichnung enthalten ist.

4. Verfahren nach Anspruch 2 oder 3, wobei die erste Unterrouten-Gruppe wenigstens eine Unterroute von einer Mobilvermittlungszentrale (MSC) zu einer weiteren MSC enthält.

5. Verfahren nach Anspruch 4, das ferner Folgendes umfasst:
Auswählen einer von der ersten Unterroute verschiedenen zweiten Unterroute aus der ersten Unterrouten-Gruppe, falls wenigstens eine von der ersten Unterroute verschiedene Unterroute in der ersten Unterrouten-Gruppe vorhanden ist;
Auswählen der Sicherungs-Unterroute aus der zweiten Unterrouten-Gruppe, falls keine von der ersten Unterroute verschiedene Unterroute in der ersten Unterrouten-Gruppe vorhanden ist.

6. Verfahren nach einem der Ansprüche 1, 2, 3 und 5, das ferner Folgendes umfasst:
Ausführen (S108-3) eines Unterbrechens der Verarbeitung für den Anruf, nachdem alle Unterrouten, die aus der Routenaufzeichnung ausgewählt worden sind, fehlerhaft sind.

7. Verfahren nach einem der Ansprüche 1, 2, 3 und 5, wobei die Routenaufzeichnung in einer MSC konfiguriert ist.

8. Vorrichtung zum Auswählen einer Unterroute, **dadurch gekennzeichnet, dass** sie Folgendes umfasst:
ein Routenaufzeichnungs-Konfigurationsmodul (402, 502), das dahingehend betreibbar ist, eine Routenaufzeichnung, die wenigstens zwei Unterrouten-Gruppen enthält, zu konfigurieren und zu speichern, wobei eine zweite Unterrouten-Gruppe wenigstens eine Sicherungs-Unterroute für einen Zeitmultiplex-Träger (TDM-Träger) enthält;
ein Unterroutenauswahlmodul (404, 506), das dahingehend betreibbar ist, eine erste Unterroute aus einer ersten Unterrouten-Gruppe in einem Anrufaufbauprozess auszuwählen;
ein Fehlerverarbeitungsmodul (406, 508), das dahingehend betreibbar ist, die Sicherungs-Unterroute, die von der ersten Unterroute verschieden ist, aus der zweiten Unterrouten-Gruppe in Übereinstimmung mit einer Fehlerverarbeitungsaufzeichnung erneut auszuwählen, wenn die erste Unterroute fehlerhaft ist.

9. Vorrichtung nach Anspruch 8, die ferner Folgendes umfasst:
ein Fehlerverarbeitungsaufzeichnungs-Konfigurationsmodul (504), das dahingehend betreibbar ist, die Fehlerverarbeitungsaufzeichnung zu konfigurieren, um eine entsprechende Beziehung zwischen einem speziellen Fehlergrund-Wert für einen Fehler einer Routenauswahl und einem Verarbeitungsmodus aufzuzeichnen; wobei das Fehlerverarbeitungsmodul Folgendes umfasst:
ein erstes Untermodul, das dahingehend betreibbar ist, einen Verarbeitungsmodus, der einem speziellen Fehlergrund-Wert für einen Fehler der ersten Unterroute entspricht, aus der Fehlerverarbeitungsaufzeichnung zu erfassen, durch Abfragen der Fehlerverarbeitungsaufzeichnung, die durch das Fehlerverarbeitungsaufzeichnungs-Konfigurationsmodul konfiguriert wird, wenn der spezielle Fehlergrund-Wert empfangen wird;
ein zweites Untermodul, das dahingehend betreibbar ist, die von der ersten Unterroute verschiedene Sicherungs-Unterroute aus der zweiten Unterrouten-Gruppe erneut auszuwählen, wenn der Verarbeitungsmodus, der dem speziellen Fehlergrund-Wert, der durch das erste Untermodul erfasst wird, entspricht, eine Unterroute erneut auswählt.

10. Vorrichtung nach Anspruch 8, die ferner Folgendes umfasst:
ein Fehlerverarbeitungsaufzeichnungs-Konfigurationsmodul (408), das dahingehend betreibbar ist, die Fehlerverarbeitungsaufzeichnung zum Aufzeichnen eines speziellen Fehlergrund-Wertes für einen Fehler der Routenauswahl zu konfigurieren; wobei
das Fehlerverarbeitungsmodul Folgendes umfasst:
ein erstes Untermodul, das dahingehend betreibbar ist, die Fehlerverarbeitungsaufzeichnung, die durch das Fehlerverarbeitungsaufzeichnungs-Konfigurationsmodul konfiguriert wird, abzufragen, wenn ein spezieller Fehlergrund-Wert empfangen wird;
ein zweites Untermodul, das dahingehend betreibbar ist, die von der ersten Unterroute verschiedene Sicherungs-Unterroute aus der zweiten Unterrouten-Gruppe erneut auszuwählen, falls ein spezieller Fehlergrund-Wert für einen Fehler der ersten Unterroute in der Fehlerverarbeitungsaufzeichnung enthalten ist.

11. Vorrichtung nach Anspruch 9 oder 10, wobei das zweite Untermodul Folgendes umfasst:
eine erste Einheit, die dahingehend betreibbar ist, eine von der ersten Unterroute verschiedene zweite Unterroute aus der ersten Unterrouten-Gruppe auszuwählen, falls wenigstens eine von der ersten Unterroute verschiedene Unterroute in der ersten Unterrouten-Gruppe vorhanden ist;
eine zweite Einheit, die dahingehend betreibbar ist, die von der ersten Unterroute verschiedene Sicherungs-Unterroute aus der zweiten Unterrouten-Gruppe auszuwählen, falls keine von der ersten Unterroute verschiedene Unterroute in der ersten Unterrouten-Gruppe vorhanden ist.

12. Vorrichtung nach Anspruch 9, die ferner Folgendes umfasst:
ein Fehlergrund-Rückleitungsmodul (410, 510), das dahingehend betreibbar ist, den speziellen Fehlergrund-Wert zu dem Fehlerverarbeitungsmodul zurückzuleiten, wenn die ausgewählte Unterroute fehlerhaft ist.

## Revendications

1. Procédé permettant de sélectionner un sous-chemin, le procédé étant **caractérisé en ce qu'**il comprend les étapes consistant à :
configurer (S102) un registre de chemins contenant au moins deux groupes de sous-chemins, un deuxième groupe de sous-chemins comportant au moins un sous-chemin de réserve pour un support de multiplexage par répartition dans le temps (TDM) ;
sélectionner (S 106) un premier sous-chemin parmi un premier groupe de sous-chemins lors d'un processus d'établissement d'un appel ;
resélectionner (S108-1) le sous-chemin de réserve distinct du premier sous-chemin parmi le deuxième groupe de sous-chemins conformément à un registre de traitement d'échec en cas d'échec du premier sous-chemin.

2. Procédé selon la revendication 1, l'étape consistant à resélectionner le sous-chemin de réserve distinct du premier sous-chemin parmi le deuxième groupe de sous-chemins conformément au registre de traitement d'échec comprenant les étapes consistant à :
configurer le registre de traitement d'échec pour enregistrer une relation de correspondance entre une valeur de motif d'échec spécifique pour l'échec de la sélection de chemin et un mode de traitement ;
obtenir à partir du registre de traitement d'échec un mode de traitement correspondant à une valeur de motif d'échec spécifique pour l'échec du premier sous-chemin en interrogeant le registre de traitement d'échec, et resélectionner le sous-chemin de réserve distinct du premier sous-chemin parmi le deuxième groupe de sous-chemins si le mode de traitement consiste à resélectionner un sous-chemin.

3. Procédé selon la revendication 1, l'étape consistant à resélectionner le sous-chemin de réserve distinct du premier sous-chemin parmi le deuxième groupe de sous-chemins conformément au registre de traitement d'échec comprenant les étapes consistant à :
configurer le registre de traitement d'échec pour enregistrer une valeur de motif d'échec spécifique pour l'échec de la sélection de chemin ;
interroger le registre de traitement d'échec, et resélectionner le sous-chemin de réserve distinct du premier sous-chemin parmi le deuxième groupe de sous-chemins si le registre de traitement d'échec contient une valeur de motif d'échec spécifique pour l'échec du premier sous-chemin.

4. Procédé selon la revendication 2 ou 3, le premier groupe de sous-chemins contenant au moins un sous-chemin depuis un centre de commutation mobile (MSC) jusqu'à un autre MSC.

5. Procédé selon la revendication 4, comprenant en outre les étapes consistant à :
sélectionner un deuxième sous-chemin distinct du premier sous-chemin parmi le premier groupe de sous-chemins s'il existe au moins un sous-chemin distinct du premier sous-chemin dans le premier groupe de sous-chemins ;
sélectionner le sous-chemin de réserve parmi le deuxième groupe de sous-chemins s'il n'existe pas de sous-chemin distinct du premier sous-chemin dans le premier groupe de sous-chemins.

6. Procédé selon l'une quelconque des revendications 1, 2, 3 et 5, comprenant en outre l'étape consistant à :
exécuter (S108-3) un traitement de déconnexion pour l'appel en cas d'échec de tous les sous-chemins sélectionnés parmi le registre de chemins.

7. Procédé selon l'une quelconque des revendications 1, 2, 3 et 5, le registre de chemins étant configuré dans un MSC.

8. Dispositif permettant de sélectionner un sous-chemin, le dispositif étant **caractérisé en ce qu'**il comprend :
un module de configuration de registre de chemins (402, 502), apte à configurer et mémoriser un registre de chemins contenant au moins deux groupes de sous-chemins, un deuxième groupe de sous-chemins comportant au moins un sous-chemin de réserve pour un support de multiplexage par répartition dans le temps (TDM) ;
un module de sélection de sous-chemin (404, 506), apte à sélectionner un premier sous-chemin parmi un premier groupe de sous-chemins lors d'un processus d'établissement d'un appel ;
un module de traitement d'échec (406, 508), apte à resélectionner le sous-chemin de réserve distinct du premier sous-chemin parmi le deuxième groupe de sous-chemins conformément à un registre de traitement d'échec en cas d'échec du premier sous-chemin.

9. Dispositif selon la revendication 8, comprenant en outre :
un module de configuration de registre de traitement d'échec (504), apte à configurer le registre de traitement d'échec pour enregistrer une relation de correspondance entre une valeur de motif d'échec spécifique pour l'échec de la sélection de chemin et un mode de traitement ;
le module de traitement d'échec comprenant :
un premier sous-module, apte à obtenir à partir du registre de traitement d'échec un mode de traitement correspondant à une valeur de motif d'échec spécifique pour l'échec du premier sous-chemin en interrogeant le registre de traitement d'échec configuré par le module de configuration de registre de traitement d'échec dès réception de la valeur de motif d'échec spécifique ;
un deuxième sous-module, apte à resélectionner le sous-chemin de réserve distinct du premier sous-chemin parmi le deuxième groupe de sous-chemins si le mode de traitement correspondant à la valeur de motif d'échec spécifique obtenue par le premier sous-module consiste à resélectionner un sous-chemin.

10. Dispositif selon la revendication 8, comprenant en outre :
un module de configuration de registre de traitement d'échec (408), apte à configurer le registre de traitement d'échec pour enregistrer une valeur de motif d'échec spécifique pour l'échec de la sélection de chemin ;
le module de traitement d'échec comprenant :
un premier sous-module, apte à interroger le registre de traitement d'échec configuré par le module de configuration de registre de traitement d'échec dès réception d'une valeur de motif d'échec spécifique ;
un deuxième sous-module, apte à resélectionner le sous-chemin de réserve distinct du premier sous-chemin parmi le deuxième groupe de sous-chemins si le registre de traitement d'échec contient une valeur de motif d'échec spécifique pour l'échec du premier sous-chemin.

11. Dispositif selon la revendication 9 ou 10, le deuxième sous-module comprenant :
une première unité, apte à sélectionner un deuxième sous-chemin distinct du premier sous-chemin parmi le premier groupe de sous-chemins s'il existe au moins un sous-chemin distinct du premier sous-chemin dans le premier groupe de sous-chemins ;
une deuxième unité, apte à sélectionner le sous-chemin de réserve distinct du premier sous-chemin parmi le deuxième groupe de sous-chemins s'il n'existe pas de sous-chemin distinct du premier sous-chemin dans le premier groupe de sous-chemins.

12. Dispositif selon la revendication 9, comprenant en outre :
un module de renvoi de motif d'échec (410, 450), apte à renvoyer la valeur de motif d'échec spécifique au module de traitement d'échec en cas d'échec du sous-chemin sélectionné.
